# EUROPEAN PATENT SPECIFICATION

(11) **EP 3 073 586 B1**
(45) Date of publication and mention of the grant of the patent: **29.04.2020**
(21) Application number: 15290080.9
(22) Date of filing: 23.03.2015
(51) Int. Cl.: H01R 39/48, H02K 9/28, H01R 39/38, H02K 9/04

(54) **AN ABRASION REMOVAL SYSTEM**
ABRASIONSENTFERNUNGSSYSTEM
SYSTEME D'ELIMINATION PAR ABRASION

(43) Date of publication of application: 28.09.2016
(73) Proprietor: GE Renewable Technologies, 38100 Grenoble (FR)
(72) Inventor: Bruna, Sebastien, 70400 Chenebier (FR); Auzolle, Thierry, 90300 Cravanche (FR); Hamburger, Jérome, 90000 Belfort (FR)
(74) Representative: Brevalex

(56) References cited:
- EP-A2- 0 971 473
- DE-A1-102012 203 098
- JP-A- H05 266 957
- US-A- 4 626 720
- US-A1- 2009 021 102

## Description

### TECHNICAL FIELD

The present disclosure relates to the removal of abrasions from brushes of electric machines. These brushes are commonly arranged at the stator and suitable for the power transmission between a bearing or collector of a rotor of an electric machine.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

EP 0 971 473 A2 describes a dust guard for a motor with commutator brushes. A hood surrounds the portion of the commutator in contact with the brush. The hood has a passageway for drawing dust laden air into the flow of cooling air for the motor.

DE 10 2012 203098 A1 describes an electrical machine with a brush system and stationary brushes electrically connected to slip rings in sliding contact connection. A brush housing surrounds the slip ring and the brushes. A closed air circulation and cooling device is arranged in the brush housing. The brush system is equipped with a filter for filtering abrasive particles.

US 4626720 A describes an electrical machine with one or more extraction devices arranged between the at least two sliding contacts directly via the slip ring and intended for extracting abraded material produced at the slip ring.

### BACKGROUND

In operation the brushes at the stator are subject to mechanical wear. These brushes are commonly made from carbon. The carbon particles separated from the brushes distribute within the electric machine. These carbon particles or carbon dust cause contaminations in the electric machine and can potentially lead to machine failures when the carbon dust causes short-circuits. It is proposed in the state of the art to remove the carbon dust from the brushes by means of suction devices to intake into the device at least shares of the arising carbon dust. There are also abrasion removal systems described with cleaning brushes next to the suction devices. None of the known abrasion removal systems however suffice high requirements to the grade of removal.

### SUMMARY

It is an object of the invention to provide an abrasion removal system for an electric machine which satisfies an adequate removal of abrasions.

This object is solved with the features of an abrasion removal system and an abrasion removal method according to the independent claims.

Further examples of the invention are disclosed in the dependent claims.

### BRIEF DESCRIPTION OF THE DRAWINGS

Further characteristics and advantages will be more apparent from the description of a preferred but non-exclusive embodiment of the abrasion removal system, illustrated by way of non-limiting example in the accompanying drawings, in which:
Fig. 1 shows a schematic perspective view of a housing of an abrasion removal system according to an example of the invention with two supply tubes fed by a supply for supplying a gaseous medium to a housing and an outlet tube above to be fed to a suction system for removing abrasions out of the housing;
Fig. 2 shows a schematic cut side view of the example of a housing of an abrasion removal system according to Fig. 1 illustrating tapered supply tubes;
Fig. 3 shows a schematic front view of the example of a housing of an abrasion removal system according to the example of Figs. 1 and 2;
Fig. 4 shows a schematic back view of the example of a housing of an abrasion removal system according to the example of Figs. 1 to 3;
Fig. 5 shows a perspective view of an example of a housing of the abrasion removal system similar to Figs. 1-4 with a brush arranged through the housing, a brush holder, and an adjacent slip ring at the rotor side;
Fig. 6 shows a block diagram of an abrasion removal system illustrating the principle of the invention in a schematic and simplified way.

### DETAILED DESCRIPTION OF EXEMPLARY EMBODIMENTS

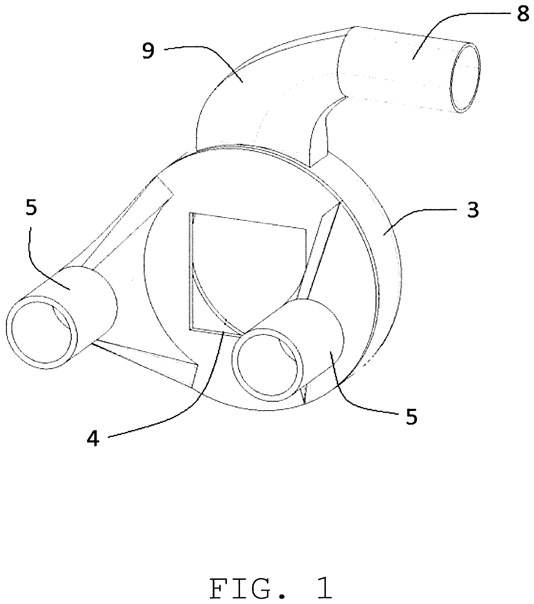

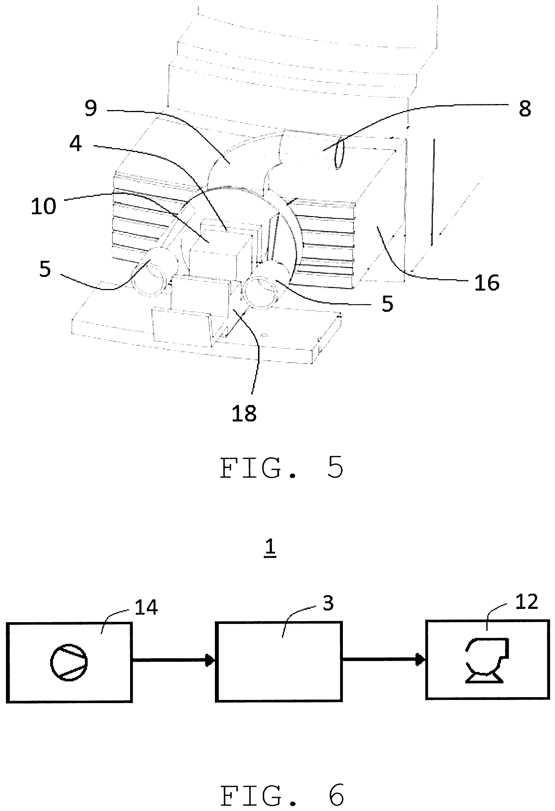

With reference to the figures, these show in Figs. 1-4 an example of the invention and in Fig. 6 the principle of the invention, wherein like reference numerals designate identical or corresponding parts throughout the several views.

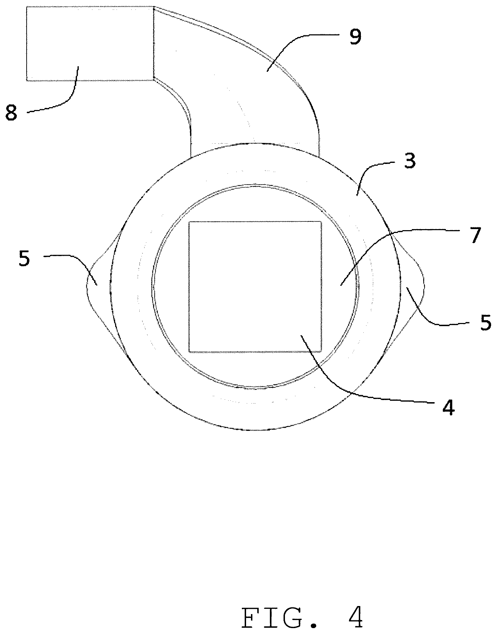

Fig. 1 shows a schematic perspective view of a housing 3 of an abrasion removal system 1 according to an example of the invention. Shown is a round housing 3 with two circular surfaces enclosing a brush 10 of an electric machine. The inlet for the brush 10 is illustrated by an opening 4 in the housing 3 in the front flat surface. The outlet for the brush 10 is illustrated by a cavity 4 in the housing 3 in the back flat surface of the housing 3, clearer illustrated in Fig. 4. The cavity 7 in the back surface has a bigger size than the opening 4 in the front surface. The back surface of the housing 3 is oriented in the direction to the rotor for the brush 10 to touch. The brush 10 is arranged at a stator of an electric machine and serves for a current transfer from the stator (foreground of Fig. 1) to the rotor (background of Fig. 1) of an electric machine.

When the housing 3 is installed at the brush 10 then the opening 4 is closed by the volume of the brush 10, as can be seen in Fig. 5. Further, the cavity 7 is confined at the back by a rotor part, and thus the whole housing 3 is closed against the surrounding, as can be seen in Fig. 5. It is visible in Fig. 1 that the housing 3 when arranged at the brush 10 covers the free space around the brush 10. This free space is the closed round area around the brush 10 in the housing 3. In this example two supply tubes 5 are arranged at the housing 3 which project perpendicularly from the housing 3. The supply tubes 5 are integrated with the housing 3 on opposite edges of the housing 3. The supply tubes 5 have partly a cylindric shape distant from the housing 3 and expand more and more in the direction nearer to the housing 3. In the expanded part the supply tubes 5 have a flatter shape and a bended cuboid shape, bended according to the bending curve of the housing 3, as can be seen in Fig. 1. The cylindric parts or terminals of the supply tubes 5 are connected to a supply for a gaseous medium 14, as can be seen in Fig. 6 in a schematic way. The supply for a gaseous medium 14, also referred to shortly as supply 14, blows a gaseous medium through the supply tubes 5 into the housing 3. The gaseous medium can be air in an example. The supply 14 comprises a compressor for compressing the gaseous medium and blowing it into the housing 3 with pressure. The stream of the gaseous medium is directed into the housing 3 along the brush 10. The generated pressure is suitable to remove and disperse the abrasion from the brush 10 occurring in operation when the rotor part slides along the brush 10. The pressure exerted by the supply 14 is approximately 1.000Pa in an example. The abrasion, usually carbon dust, is dispersed within the closed housing 3. It is essential that the abrasion when dispersed by the gaseous medium cannot escape from the space around the brush 10 confined by the housing 3. The housing 3 is manufactured with high precision to adjust to the surface of the rotor part, e.g. a slip ring 16, and to keep the gap between the rotor part and the housing small. According to the invention the abrasion does not pollute the electric machine outside the housing 3 of the brush 10. A third tube is arranged at the housing 3, an outlet tube 8. The outlet tube 8 contains a cylindric part and a bended part 9. The cylindric part projects perpendicular to the supply tubes 5 and tangential to the housing 3. The bended part 9 of the outlet tube 8 has the shape of a bended cuboid tapered in the direction away from the housing 3 and which connects the cylindric part with the housing 3 to create an outlet of the housing 3. The cylindric parts of the outlet tube 9 and also the supply tubes 5 also fulfil the function of terminals to connect. The outlet tube 8 is connected to a suction system 12, shown schematically in Fig. 6, which generates a suction power which is applied to the housing 3 via the outlet tube 8. The suction system 12 is a ventilator in an example of the invention. The suction system 12 is operated contemporary with the supply 14. The abrasion dispersed in the housing 3 by the supply 14 is absorbed by the suction system 12 which further comprises a container for storage of the abrasion. The abrasion removal system 1 thus comprises the housing 3 with supply tubes 5, outlet tube 8, suctions system 12, and supply for a gaseous medium 14, as is shown in Fig. 6. As described above, the abrasion is removed from the brush 10, dispersed within the housing 3, and removed from the housing 3.

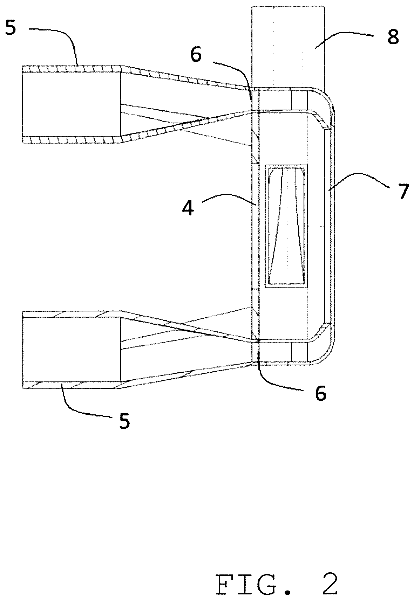

Fig. 2 shows a schematic cut side view of the example of the housing 3 of the abrasion removal system 1 according to Fig. 1. In this view the two different parts of the supply tubes 5 at the left can be seen, the cylindric part and the tapered part. Shown is in the cut view the opening 4 in the left face of the housing 3 for introducing the brush 10 from the left to the right in this perspective. The opening 4 is adjusted for insertion of the brush 10 and thus the opening 4 is completely closed in operation. At the right side in this perspective the brush 10 projects slightly from the housing 3 through the cavity 7 in the right face of the housing 3 and touches a bearing, collector, or slip ring 16 of a rotor. The abrasion removal system 1 is designed in a way that the housing does not touch the slip ring 16 in operation.

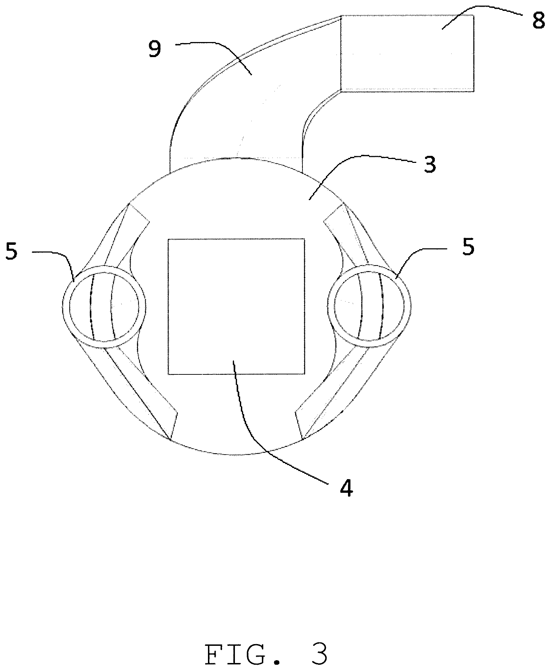

Fig. 3 shows a schematic front view of the example of the housing 3 of an abrasion removal system 1 according to the example of Figs. 1 and 2. In particular in this view the opening 4 in the housing 3 can be seen, which is adjusted to accommodate the brush 10 so that the brush 10 is fixed in the frame of the opening 4. As the brush 10 has commonly a cuboid shape, the opening 4 in the wall of the housing 3 has a corresponding rectangular shape.

Fig. 4 shows a schematic back view of the housing 3 of an abrasion removal system 1 according to the example of Figs. 1 to 3. The back side of the housing 3 which is shown in the foreground in Fig. 4, is the side aligned to the rotor part, e.g. the slip ring 16. This is the side at which the brush 10 slides along the slip ring 16 and collects the current generated. Here, in particular, the cavity 7 in the housing 3 is shown exemplary. In operation, again the cavity is confined by the slip ring 16. The cavity 7 has a round shape and a circle is cut out from the wall of the housing 3. The cavity 7 has a bigger diameter than the opening 4 which is in the background in the perspective according to Fig. 4. The diameter of the cavity 7 can be extended up to the whole surface of the housing 3. The diameter of the cavity 7 has to be higher than the diameter of the opposed opening 4 as by this means the space next to the brush 10 can be effected by the supply 14 and the suction system 12 for the abrasion to be removed also in this space.

Fig. 5 shows a perspective view of an example of the housing 3 of the abrasion removal system 1 similar to Figs 1-4 which is installed at the stator side of the rotating electric machine. In Fig. 5 the brush 10 is connected to a brush holder 18 that consists of a plate and a holding device on the plate to accommodate the brush 10. In the foreground of the perspective view the brush 10 is clamped at the brush holder 18 and projects through the opening 4 of the housing 3. At the opposite side of the housing 3 at the other flat face of the housing 3 the brush 10 projects out of the housing 3 to abut the slip ring 16 which is connected to the rotor.

Fig. 6 shows a block diagram of an abrasion removal system 1 illustrating the principle of the invention in a schematic and simplified way. The abrasion removal system 1 contains the supply for a gaseous medium 14, the housing 3, and the suction system 12. The left block shows the supply for a gaseous medium 14, e.g. comprising a compressor. This supply 14 is connected to the terminals of the supply tubes 5 of the housing 3. The supply 14 blows a gaseous medium into the housing 3 which develops a flow stream around the brush. By means of this stream of gaseous medium abrasions of the brush 10 are removed from the surface of the brush 10 and follow the gaseous stream inside the housing 3. The suction system 12 is connected to the terminals of the outlet tube 8 at the cylindric part of the outlet tube 8. Here, the suction system 12 comprises a ventilator. The stream of gaseous medium with the abrasion inside the housing 3 is attracted and sucked by the intake pressure generated by the suction system 12. The abrasion is either discharged or filtered and to be stored in a container finally. A transfer of the gaseous medium from the supply 14 to the suction system 12 occurs. The abrasion removal system 1 can in a further example be designed as a closed system in which the output of the suction system 12 defines the input of the supply 14. In this example of a closed loop the stream of gaseous medium is filtered between the suction system 12 and the supply 14 to filter out the abrasion.

### REFERENCE NUMBERS

- 1: abrasion removal system
- 3: housing
- 4: opening
- 5: supply tube
- 6: passage
- 7: cavity
- 8: outlet tube
- 9: bended part
- 10: brush
- 12: ventilator
- 14: compressor
- 16: slip ring
- 18: brush holder

## Claims

1. An abrasion removal system (1) for removing abrasion from a brush (10) of an electric machine, such as a synchronous generator or a turbogenerator, the system (1) comprising a brush (10), a housing (3) arranged around the brush (10), a supply (14) to blow a gaseous medium into the housing (3), and a suction system (12) for intake of the abrasions out of the housing (3), **characterized in that** the housing (3) is round with two circular surfaces enclosing the brush (10), the housing (3) comprises an opening (4) adjusted for insertion of the brush (10), the housing (3) comprises a cavity (7) from which the brush (10) projects, the brush (10) being configured to touch the slip ring (16) of the rotor of the electric machine in operation, the supply (14) comprises a compressor (14) for blowing the gaseous medium into the housing (3) and two supply tubes (5) arranged at the housing (10) and integrated with the housing (3) on opposite edges, and the suction system (12) comprises a ventilator (12) and an outlet tube (8) arranged at the housing (3) for intake of the abrasions out of the housing (3).

2. The abrasion removal system (1) according to claim 1, **characterized by** two supply tubes (5) arranged at the housing (3) each comprising a passage (6) to the housing (3) for blowing the gaseous medium into the housing (3) through the supply tubes (5).

3. The abrasion removal system (1) according to claim 1, **characterized in that** the outlet tube (8) comprises a passage (6) to the housing (3) for intaking the abrasion through the outlet tube (8).

4. Abrasion removal method for removing abrasion from a brush (10) of an electric machine with the steps of blowing a compressed gaseous medium into a housing (3) surrounding the brush (10), and intaking the abrasion out of the inside of the housing (3) with an abrasion removal system (1) according to one of the preceding claims.

## Patentansprüche

1. Abriebbeseitigungssystem (1) zum Beseitigen von Abrieb von einer Brüste (10) einer elektrischen Maschine, wie etwa eines Synchrongenerators oder eines Turbogenerators, wobei das System (1) eine Bürste (10), ein Gehäuse (3), das um die Bürste (10) herum angeordnet ist, eine Zufuhr (14), um ein gasförmiges Medium in das Gehäuse (3) zu blasen, und ein Saugsystem (12) zur Aufnahme der Abreibungen aus dem Gehäuse (3) umfasst, **dadurch gekennzeichnet, dass** das Gehäuse (3) rund ist, wobei zwei kreisförmige Oberflächen die Bürste (10) einschließen, das Gehäuse (3) eine Öffnung (4) umfasst, die zum Einfügen der Bürste (10) angepasst ist, das Gehäuse (3) einen Hohlraum (7) umfasst, aus dem die Bürste (10) vorsteht, wobei die Bürste (10) konfiguriert ist, um den Schleifring (16) des Rotors der elektrischen Maschine im Betrieb zu berühren, die Zufuhr (14) einen Kompressor (14) zum Blasen des gasförmigen Mediums in das Gehäuse (3) und zwei Zufuhrröhren (5), die an dem Gehäuse (10) angeordnet sind und in das Gehäuse (3) an gegenüberliegenden Kanten integriert sind, umfasst, und das Saugsystem (12) einen Ventilator (12) und eine Auslassröhre (8) umfasst, die an dem Gehäuse (3) zur Aufnahme der Abreibungen aus dem Gehäuse (3) angeordnet ist.

2. Abriebbeseitigungssystem (1) nach Anspruch 1, **gekennzeichnet durch** zwei Zufuhrröhren (5), die an dem Gehäuse (3) angeordnet sind und jeweils einen Durchgang (6) zu dem Gehäuse (3) umfassen, um das gasförmige Medium durch die Zufuhrröhren (5) hindurch in das Gehäuse (3) zu blasen.

3. Abriebbeseitigungssystem (1) nach Anspruch 1, **dadurch gekennzeichnet, dass** die Auslassröhre (8) einen Durchgang (6) zu dem Gehäuse (3) zur Aufnahme des Abriebs durch die Auslassröhre (8) hindurch umfasst.

4. Abriebbeseitigungsverfahren zum Beseitigen von Abrieb von einer Bürste (10) einer elektrischen Maschine mit den Schritten des Blasens eines komprimierten gasförmigen Mediums in ein Gehäuse (3), das die Bürste (10) umgibt, und des Aufnehmens des Abriebs aus dem Innern des Gehäuses (3) mit einem Abriebbeseitigungssystem (1) nach einem der vorhergehenden Ansprüche.

## Revendications

1. Système d'élimination de produits d'abrasion (1) pour éliminer les produits d'abrasion d'une brosse (10) d'une machine électrique, telle qu'un générateur synchrone ou un turbogénérateur, le système (1) comprenant une brosse (10), un logement (3) agencé autour de la brosse (10), une alimentation (14) pour souffler un milieu gazeux dans le logement (3), et un système d'aspiration (12) pour l'admission des produits d'abrasion hors du logement (3), **caractérisé en ce que** le logement (3) est rond avec deux surfaces circulaires enfermant la brosse (10), le logement (3) comprend une ouverture (4) ajustée pour l'insertion de la brosse (10), le logement (3) comprend une cavité (7) à partir de laquelle la brosse (10) fait saillie, la brosse (10) étant configurée pour toucher la bague collectrice (16) du rotor de la machine électrique en fonctionnement, l'alimentation (14) comprend un compresseur (14) pour souffler le milieu gazeux dans le logement (3) et deux tubes d'alimentation (5) agencés au niveau du logement (10) et intégrés au logement (3) sur les côtés opposés, et le système d'aspiration (12) comprend un ventilateur (12) et un tube de sortie (8) agencé au niveau du logement (3) pour l'admission des produits d'abrasion hors du logement (3).

2. Système d'élimination de produits d'abrasion (1) selon la revendication 1, **caractérisé par** deux tubes d'alimentation (5) agencés au niveau du logement (3) comprenant chacun un passage (6) vers le logement (3) pour souffler le milieu gazeux dans le logement (3) à travers les tubes d'alimentation (5).

3. Système d'élimination de produits d'abrasion (1) selon la revendication 1, **caractérisé en ce que** le tube de sortie (8) comprend un passage (6) vers le logement (3) pour l'admission des produits d'abrasion à travers le tube de sortie (8).

4. Procédé d'élimination de produits d'abrasion pour éliminer les produits d'abrasion d'une brosse (10) d'une machine électrique avec les étapes de soufflage d'un milieu gazeux comprimé dans un logement (3) entourant la brosse (10), et l'admission des produits d'abrasion hors de l'intérieur du logement (3) avec un système d'élimination de produits d'abrasion (1) selon l'une quelconque des revendications précédentes.
